# EUROPEAN PATENT APPLICATION

(11) **EP 4 542 954 A1**
(43) Date of publication of application: **23.04.2025**
(21) Application number: 23829743.6
(22) Date of filing: 12.05.2023
(51) Int. Cl.: H04L 43/028

(54) **SERVICE IDENTIFICATION METHOD, SYSTEM AND APPARATUS, AND STORAGE MEDIUM AND PROGRAM PRODUCT**

(30) Priority: 28.06.2022 CN 202210740126
(71) Applicant: ZTE Corporation, Shenzhen, Guangdong 518057 (CN)
(72) Inventor: SONG, Ke, Shenzhen, Guangdong 518057 (CN); ZHU, Na, Shenzhen, Guangdong 518057 (CN); LI, Huaguang, Shenzhen, Guangdong 518057 (CN); LI, Lin, Shenzhen, Guangdong 518057 (CN); CAI, Hongbo, Shenzhen, Guangdong 518057 (CN)
(74) Representative: Savi, Massimiliano
(86) International application number: PCT/CN2023/093892
(87) International publication number: WO 2024/001557

(57) **Abstract**

The embodiments of the present application provide a service identification method, system and apparatus, and a storage medium and a program product. The service identification method comprises: acquiring a first domain name system message (S1000); obtaining first traffic information of a target service according to the first domain name system message (S2000); obtaining a first mapping relationship between the target service and domain name information, and a first traffic statistical feature of the target service according to the first traffic information (S3000); acquiring a second domain name system message according to the domain name information, obtaining second traffic information according to the second domain name system message, and obtaining a related IP address of the domain name information according to the second traffic information (S4000); and according to the first mapping relationship, the related IP address and the first traffic statistical feature, performing service identification on the current service.

## Description

### CROSS-REFERENCE TO RELATED APPLICATION

This application is filed on the basis of Chinese patent application No. 202210740126.7 filed June 28, 2022, and claims priority to the Chinese patent application, the entire contents of which are incorporated herein by reference.

### TECHNICAL FIELD

Embodiments of the present disclosure relates to the technical field of communications, and in particular to a method for service identification, system and apparatus, a storage medium, and a program product.

### BACKGROUND

A Deep Packet Inspection (DPI) technology is used to identify service types in users' network access traffic. It mainly relies on plaintext features in user traffic (such as domain names in Domain Name System (DNS), Host in HTTP, and Service Name Indications (SNIs) in HTTPS/TLS/QUIC) to quickly distinguish and identify service types, such that a network element device or a network management system can perform functions such as statistics, charging, and quality analysis based on the service types.

However, for network services using a full encryption mode, e.g., network services encrypted using DNS protocols such as DNS over HTTPS (DoH) and DNS over QUIC (DoQ) or HTTPS protocols and QUIC protocols based on Encrypted ClientHello (ECH), DNS domain names and SNIs in the network traffic are encrypted and not visible, and DPI fails to obtain common plaintext traffic feature information such as DNS domain name and SNI, leading to a decrease in the ability to identify service types. Therefore, how to enable DPI to identify services in fully encrypted user traffic is an urgent problem to be discussed and solved.

### SUMMARY

Embodiments of the present disclosure provide a method for service identification, system and apparatus, a storage medium, and a program product.

In accordance with a first aspect of the present disclosure, an embodiment provide a method for service identification, including: acquiring a first DNS message; obtaining first traffic information of a target service according to the first DNS message, where the first traffic information includes domain name information; obtaining a first mapping relationship between the target service and the domain name information and a first traffic statistics feature of the target service according to the first traffic information; acquiring a second DNS message according to the domain name information, obtaining second traffic information according to the second DNS message, and obtaining a related Internet Protocol (IP) address corresponding to the domain name information according to the second traffic information; and performing service identification on a current service according to the first mapping relationship, the related IP address, and the first traffic statistics feature.

In accordance with a second aspect of the present disclosure, an embodiment provide a system for service identification, including: an information acquisition module, configured for acquiring a first DNS message, and obtaining first traffic information of a target service according to the first DNS message, where the first traffic information includes domain name information; a training module, configured for obtaining a first mapping relationship between the target service and the domain name information and a first traffic statistics feature of the target service according to the first traffic information; and a matching module, configured for acquiring a second DNS message according to the domain name information, obtaining second traffic information according to the second DNS message, obtaining a related IP address corresponding to the domain name information according to the second traffic information, and performing service identification on a current service according to the first mapping relationship, the related IP address, and the first traffic statistics feature.

In accordance with a third aspect of the present disclosure, an embodiment provides an apparatus for service identification, including a processor and a memory storing a program, where the program, when read and executed by the processor, causes the processor to implement the method in accordance with the first aspect.

In accordance with a fourth aspect of the present disclosure, an embodiment provides a computer-readable storage medium, storing a computer-executable instruction which, when executed by a processor, causes the processor to implement the method in accordance with the first aspect.

In accordance with a fifth aspect of the present disclosure, an embodiment provides a computer program product, including a computer program or a computer instruction stored in a computer-readable storage medium, where the program or a computer instruction, when read from the computer-readable storage medium and executed by a processor of a computer device, causes the computer device to implement the method in accordance with the first aspect.

### BRIEF DESCRIPTION OF DRAWINGS

FIG. 1 is a flowchart of a method for service identification according to an embodiment of the present disclosure;
FIG. 2 is a flowchart of an implementation of S3000 in FIG. 1;
FIG. 3 is a schematic diagram of a first-level mapping relationship and a second-level mapping relationship in a method for service identification according to an embodiment of the present disclosure;
FIG. 4 is a schematic diagram of a first mapping relationship in a method for service identification according to an embodiment of the present disclosure;
FIG. 5 is a flowchart of an implementation of S4000 in FIG. 1;
FIG. 6 is a flowchart of an implementation of S5000 in FIG. 1;
FIG. 7 is a flowchart of an implementation of S5100 in FIG. 6;
FIG. 8 is a flowchart of an implementation of S5110 in FIG. 7;
FIG. 9 is a schematic diagram of a fifth mapping relationship between related IP addresses in a method for service identification according to an embodiment of the present disclosure;
FIG. 10 is a flowchart of an implementation of S5200 in FIG. 6;
FIG. 11 is a schematic diagram of time window partitioning in a method for service identification according to an embodiment of the present disclosure;
FIG. 12 is a schematic diagram of value ranges corresponding to traffic statistics features in each time window in a method for service identification according to an embodiment of the present disclosure;
FIG. 13 is a flowchart of an implementation of S5230 in FIG. 10; and
FIG. 14 is a schematic diagram of a system for service identification according to an embodiment of the present disclosure.

### DETAILED DESCRIPTION

It is to be noted, although functional modules have been divided in the schematic diagrams of systems and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order

In the description of the embodiments of the present disclosure, unless otherwise explicitly defined, the terms such as "configure", "install/mount" and "connect" should be understood in a broad sense, and those having ordinary skills in the art can reasonably determine the specific meanings of the above terms in the embodiments of the present disclosure based on the specific contents of the technical schemes. In the embodiments of the present disclosure, any embodiment or design described following the terms such as "in an embodiment," "in some embodiments," and "for example" is used to indicate examples, explanations, or illustrations, and should not be construed as being superior or advantageous over other embodiments or designs. The use of the terms such as "in an embodiment," "in some embodiments," and "for example" is intended to present the relevant concepts.

DPI is used to identify service types in users' network access traffic. It mainly relies on plaintext features in user traffic to quickly distinguish and identify service types, such that a network element device or a network management system can perform functions such as statistics, charging, and quality analysis based on the service types.

At present, mainstream protocols in the Internet include DNS, Hypertext Transfer Protocol (HTTP), Hypertext Transfer Protocol Secure (HTTPS), and Quick UDP Internet Connection (QUIC). DNS and HTTP are plaintext protocols and HTTPS and QUIC are encrypted protocols.

In recent years, to protect user privacy and ensure secure network access, more and more network services (for example, websites and applications) tend to use encryption, so the proportion of HTTPS and QUIC is becoming higher. The Secure Socket Layer (SSL) and Transport Layer Security (TLS) protocols on which HTTPS is based have also been evolving, for example, from TLS1.2 to TLS1.3. A significant change in TLS1.3 lies in that extended fields that do not need to be presented in plaintext in ClientHello and ServerHello messages are encrypted, and a Certificate message itself is fully encrypted. QUIC protocols have also evolved from the original Google gQUIC to the official IETF-QUIC. In IETF-QUIC, the entire initial packet ClientHello message is encrypted. DNS protocols have evolved from plaintext to DoH and DoQ. In DoH and DoQ, the domain name in the DNS request message and the IP address, domain name, and alias in the DNS response message are no longer visible plaintext.

At present, although the entire initial packet ClientHello message in QUIC is encrypted, a key can be calculated using salts and encryption algorithms disclosed in a series of related protocols (Request For Comments (RFC)). Therefore, the content of the message is essentially publicly visible to network devices, and this belongs to pseudo-encryption of ClientHello. However, ECH standardized at the IETF involves real encryption of ClientHello, and the content of TLS and QUIC ClientHello messages cannot be decrypted and are no longer visible to network devices.

For DPI devices, the domain name and IP address in the DNS request/response message, the Host field in the HTTP request, and the SNI extension field in the SSL/TLS/QUIC ClientHello message are all important features for identifying service types through DPI.

At present, service traffic based on DNS such as DoH or DoQ and QUIC with ClientHello pseudo-encryption has appeared in currently operating networks, and a DPI device has to decrypt the pseudo-encrypted QUIC ClientHello to acquire SNI information for service identification. In the future, if service traffic based on DNS such as DoH or DoQ and HTTPS/TLS/QUIC based on ECH with real encryption of ClientHello, i.e., fully encrypted service traffic, appears in networks, DPI will not be able to use existing technologies for service identification. As a result, the identification rate of DPI will drop significantly, and identification capability of DPI will be seriously affected. The DPI-based service identification function has become a basic function in various network devices. Nowadays, the service traffic of users in 5G networks is becoming larger, and it is necessary to perform service identification through DPI to allocate different network bearer resources to services of different priorities, to match the resources with the services. As such, the normal operation of services is ensured without wasting resources. For example, extended Reality (XR), a key service in 5G, needs to be identified through DPI before allocation of network bearer resources, to ensure that the XR service is guaranteed preferentially. XR is an important application in network Quality of Service/Quality of Experience (QoS/QoE) field.

In view of the above, embodiments of the present disclosure provide a method for service identification, system and apparatus, a storage medium, and a program product. The method includes: acquiring a first DNS message; obtaining first traffic information of a target service according to the first DNS message, where the first traffic information includes domain name information; obtaining a first mapping relationship between the target service and the domain name information and a first traffic statistics feature of the target service according to the first traffic information; acquiring a second DNS message according to the domain name information, obtaining second traffic information according to the second DNS message, and obtaining a related IP address corresponding to the domain name information according to the second traffic information; and performing service identification on a current service according to the first mapping relationship, the related IP address, and the first traffic statistics feature. In this way, the capability of the DPI system in identifying encrypted services is improved, and normal identification of services through DPI in the above scenarios is ensured.

In this embodiment, the method for service identification is executed by a system for service identification, the system includes a service identification apparatus, and the service identification apparatus may be an independent DPI device, a gateway/router/firewall with a built-in DPI function, etc. A sampling target of the method for service identification may be a terminal device accessible to a network, such as a mobile phone or a tablet computer.

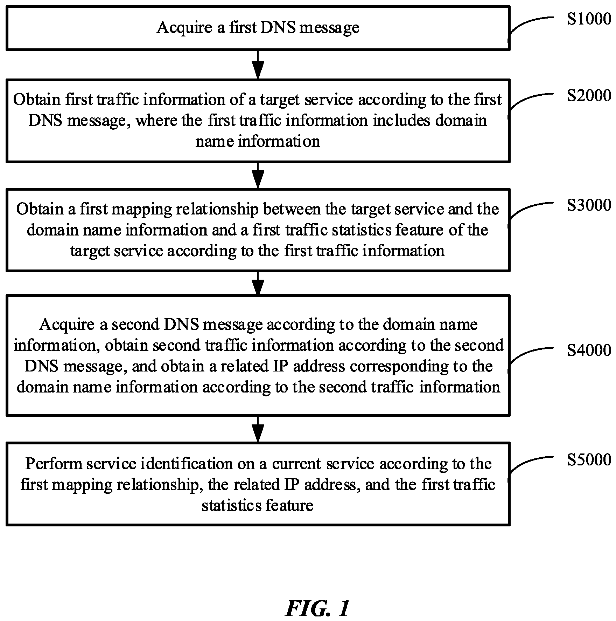

FIG. 1 is a schematic flowchart of a method for service identification according to an embodiment of the present disclosure. The method includes, but not limited to, the following operations S1000, S2000, S3000, S4000, and S5000.

At operation S1000, a first DNS message is acquired.

In some embodiments, a terminal device for information acquisition transmits a DNS query in plaintext, the terminal device initiates various services to a DNS server, initiates a query request to the DNS server, and obtains a first DNS message according to a response message returned by the DNS server.

In some embodiments, the terminal device for information acquisition may initiate one or more query requests to the DNS server for the same service to implement information acquisition for multiple times, and obtain a plurality of first DNS messages corresponding to the same service according to a plurality of response messages returned by the DNS server.

In some embodiments, the terminal device for information acquisition may initiate one or more query requests to the DNS server for a plurality of services to implement information acquisition of the services for multiple times, and obtain a plurality of first DNS messages corresponding to the different services according to a plurality of response messages returned by the DNS server.

It should be noted that there may be a plurality of DNS servers, and the terminal device for information acquisition may send a query request to the plurality of DNS servers. The DNS server may be a server provided by a service provider that stores mappings between resources such as domain names and IP addresses.

At operation S2000, first traffic information of a target service is obtained according to the first DNS message, where the first traffic information includes domain name information.

In some embodiments, the terminal device for information acquisition may initiate the same service to the DNS server for multiple times, and traffic information of several domain names is generated. After multiple times of information acquisition, the terminal device for information acquisition respectively acquires a first DNS message corresponding to each time of information acquisition, and obtains first traffic information of the service corresponding to each time of information acquisition according to the first DNS message. The first traffic information includes one or more pieces of domain name information of the service, and the domain name information includes domain names of several traffic.

In some embodiments, the terminal device for information acquisition may initiate different services to the DNS server, and traffic information of several domain names in the different services is generated. The terminal device for information acquisition respectively performs information acquisition for each service for multiple times, acquires first traffic information of each service corresponding to each time of information acquisition. The first traffic information includes domain name information of each service. The domain name information includes domain names of several traffic.

At operation S3000, a first mapping relationship between the target service and the domain name information, and a first traffic statistics feature of a target service are obtained according to the first traffic information.

In some embodiments, the terminal device for information acquisition may initiate the same service or different services to the DNS server for multiple times, and acquire a first mapping relationship between the target service and the domain name information according to the first traffic information of the service. The first mapping relationship includes a first mapping relationship between a service name of the target service and a domain name. The first mapping relationship may be a mapping relationship from the service name to the domain name. The first traffic statistics feature of the target service is acquired. The first traffic statistics feature includes, but not limited to, at least one of: a range of a number of concurrent Transmission Control Protocol (TCP) connections, a range of a number of concurrent User Datagram Protocol (UDP) connections, a range of a ratio of an average uplink rate to an average downlink rate, a range of a ratio of uplink traffic to downlink traffic, or a range of a number of distinct network-side ports, or a range of a number of distinct domain names.

In some embodiments, the first mapping relationship may be a mapping relationship from domain names to service names.

In some embodiments, the first mapping relationship may be a mapping relationship from service names to domain names.

In some embodiments, the first mapping relationship may be a mapping relationship from domain names to service names and then from service names to domain names.

In some embodiments, the first mapping relationship may be a mapping relationship from service names to domain names and then from domain names to service names.

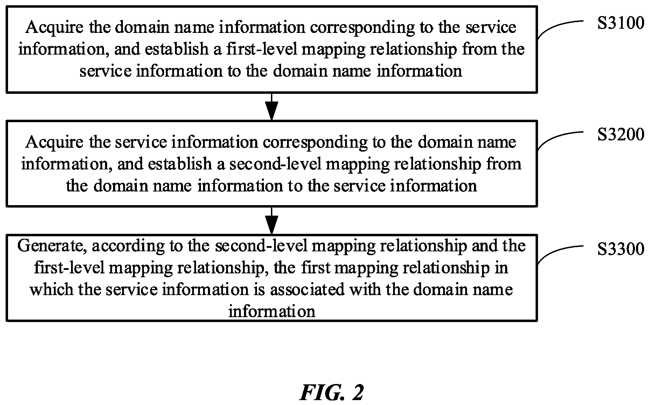

FIG. 2 is a flowchart of an implementation of S3000 in FIG. 1. S3000 includes the following operations S3100, S3200, and S3300.

At operation S3100, the domain name information corresponding to the service information is acquired, and a first-level mapping relationship from the service information to the domain name information is established.

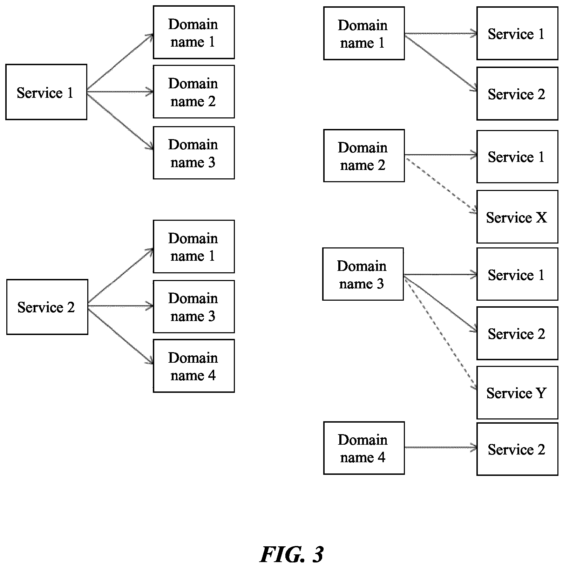

It should be noted that the first traffic information includes service information, and the service information includes a service name (or referred to as a service type). A network service may involve access to a plurality of different servers, and therefore, the same target service may correspond to different domain name information in the service information. For example, the same service name may correspond to different domain names, or different service names may correspond to the same domain name. First, the domain name information corresponding to the service information may be acquired from the first traffic information, and a first-level mapping relationship from the service information to the domain name information may be established, such that one or more corresponding domain names can be found based on the service information. For example, as shown in FIG. 3, a service 1 corresponds to a domain name 1, a domain name 2, and a domain name 3, and a service 2 corresponds to the domain name 1, the domain name 3, and a domain name 4. After the first-level mapping relationship from the service information to the domain name information is established, the corresponding domain name 1, domain name 2, and domain name 3 can be found according to the service 1, and the corresponding domain name 1, domain name 3, and domain name 4 can be found according to the service 2.

At operation S3200, the service information corresponding to the domain name information is acquired, and a second-level mapping relationship from the domain name information to the service information is established.

It should be noted that because the same service information may correspond to different domain name information and the same domain name information may correspond to different service information, it is feasible to acquire the service information corresponding to the domain name information and establish a second-level mapping relationship from the domain name information to the service information. For example, as shown in FIG. 3, a domain name 1 corresponds to a service 1 and a service 2, a domain name 2 corresponds to the service 1 and a service x, a domain name 3 corresponds to the service 1, the service 2, and a service y, and a domain name 4 corresponds to the service 2. The corresponding service 1 and service 2 can be found according to the domain name 1. The corresponding service 1 and service x can be found according to the domain name 2. The corresponding service 1, service 2, and service y can be found according to the domain name 3. The corresponding service 2 can be found according to the domain name 4.

At operation S3300, the first mapping relationship in which the service information is associated with the domain name information is generated according to the second-level mapping relationship and the first-level mapping relationship.

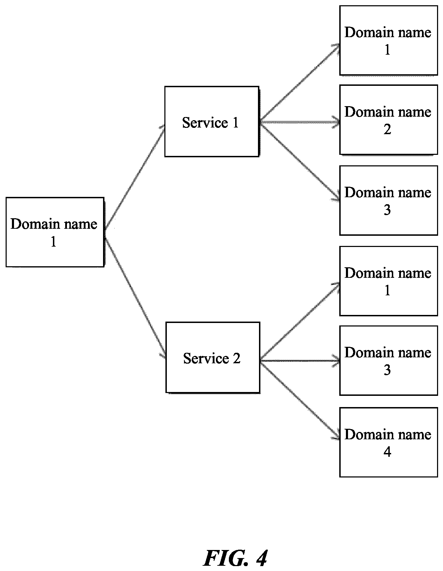

In some embodiments, the first mapping relationship is an association relationship from the domain name information to the service information and then from the service information to the domain name information. For example, as shown in FIG. 4, the first mapping relationship is an association relationship from domain names to service names and then from service names to domain names. According to the first mapping relationship, one or more services corresponding to a domain name can be found according to the domain name, and then other domain names of the one or more services can be found. For example, a domain name 1 corresponds to a service 1 and a service 2, the service 1 corresponds to the domain name 1, a domain name 2, and a domain name 3, and the service 2 corresponds to the domain name 1, the domain name 3, and a domain name 4. In this case, the corresponding service 1 and service 2 can be found according to the domain name 1, and then the domain name 1, the domain name 2, the domain name 3, and the domain name 4 corresponding to the service 1 and the service 2 can be found.

At operation S4000, a second DNS message is acquired according to the domain name information, second traffic information is obtained according to the second DNS message, and a related IP address corresponding to the domain name information is obtained according to the second traffic information.

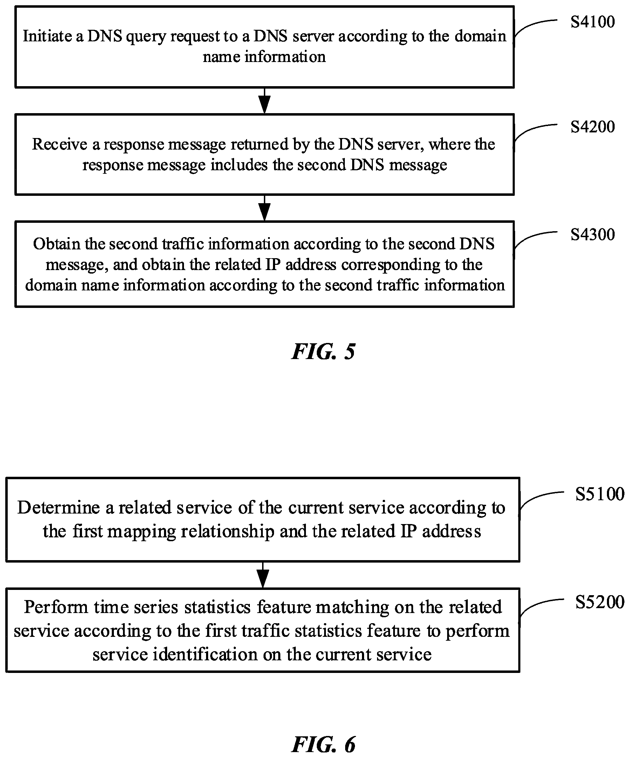

In some embodiments, second DNS messages are actively and continuously collected according to the domain name information, second traffic information is obtained according to the second DNS messages, and related IP addresses corresponding to the domain name information can be obtained according to the second traffic information. FIG. 5 is a flowchart of an implementation of S4000, including the following operations S4100, 4200, and 4300.

At operation S4100, a DNS query request is initiated to a DNS server according to the domain name information.

At operation S4200, a response message returned by the DNS server is received, where the response message includes the second DNS message.

At operation S4300, the second traffic information is obtained according to the second DNS message, and the related IP address corresponding to the domain name information is obtained according to the second traffic information.

It should be noted that, as a DNS client, the system for service identification periodically continuously and actively initiates a DNS query request to a designated DNS server according to the domain name information, the DNS server sends a response message including an IP address to the system for service identification according to the query request, and the system for service identification receives the response message returned by the DNS server, and obtains a related IP address corresponding to the domain name information according to the response message. The system for service identification may communicate with one or more DNS servers, and different DNS servers may return different results. By querying different DNS servers with the same domain name, IP addresses in broader range can be obtained. For example, an IP address corresponding to a domain name 1 is queried. The system for service identification may initiate a DNS query request to different DNS servers. A DNS server 1 returns an IP address 1 and an IP address 2, and a DNS server 2 returns an IP address 3 and an IP address 4. As such, four IP addresses related to the domain name 1 are obtained.

In some embodiments, the domain name information may be domain name information corresponding to certain service information in the second traffic information, and the corresponding domain name information is acquired according to the service information.

In some embodiments, the domain name information may be all domain name information obtained according to the first mapping relationship. For example, a domain name of a service is acquired, then a plurality of service names corresponding to the domain name are found according to the first mapping relationship. Then, all domain names corresponding to the plurality of service names are found according to the second mapping relationship. Then, a query request is initiated to the DNS server according to all the domain names to obtain related IP addresses corresponding to all the domain names, and a cached IP address set is established.

It should be noted that the system for service identification obtains Time To Live (TTL) information corresponding to the domain name information according to the response message returned by the DNS server, determines whether there is an expired IP address in the related IP addresses according to the TTL information, and if yes, deletes the expired IP address and deletes an association relationship between the expired IP address and the domain name.

At operation S5000, service identification is performed on a current service according to the first mapping relationship, the related IP address, and the first traffic statistics feature.

FIG. 6 is a flowchart of an implementation of S5000 in FIG. 6, including the following operations S5100 and S5200.

At operation S5100, a related service of the current service is determined according to the first mapping relationship and the related IP address.

At operation S5200, time series statistics feature matching is performed on the related service according to the first traffic statistics feature to perform service identification on the current service.

In some embodiments, there may be zero, one or more related services corresponding to the current service in the second traffic information. If the number of related services is zero, it indicates that there is no related service corresponding to the current service in the second traffic information, indicating that the service identification fails. If there are one or more related services corresponding to the current service in the second traffic information, time series statistics feature matching is performed on the one or more related services according to the first traffic statistics feature to perform service identification on the current service.

In some embodiments, an association between a service name and domain name information may be found according to the first mapping relationship, and a plurality of related IP addresses corresponding to the domain name information may be found according to the domain name information to form a cached IP address set. During identification of the current service, a current IP address of the current service may be acquired, and the current IP address is matched against the cached IP address set. If a match for the current IP address is found in the cached IP address set, related traffic information of the related service corresponding to the current IP address is acquired, a related service corresponding to the current service is determined, and then the second traffic statistics feature in the related traffic information is matched with the first traffic statistics feature in the related traffic information to identify the current service.

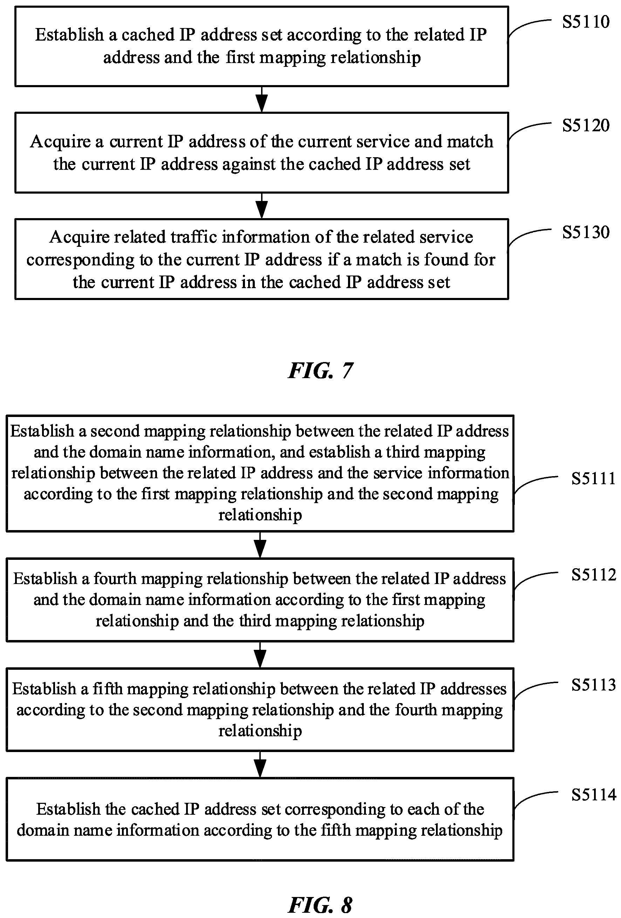

FIG. 7 is a flowchart of an implementation of S5100 in FIG. 7, including the following operations S5110, S5120, and S5130.

At operation S5110, a cached IP address set is established according to the/each related IP address and the first mapping relationship.

In some embodiments, the service information corresponding to the domain name information in the second traffic information may be found according to the first mapping relationship, and all IP addresses corresponding to the service information may be found according to the service information, to establish a cached IP address set.

In some embodiments, it is also feasible to establish a second mapping relationship between the related IP address and the domain name information. The related IP addresses can be found more extensively according to the first mapping relationship and the second mapping relationship. FIG. 8 is a of an implementation of S5110 in FIG. 8, including the following operations S5111, S5112, S5113, and S5114.

At operation S5111, a second mapping relationship between the related IP address and the domain name information is established, and a third mapping relationship between the related IP address and the service information is established according to the first mapping relationship and the second mapping relationship.

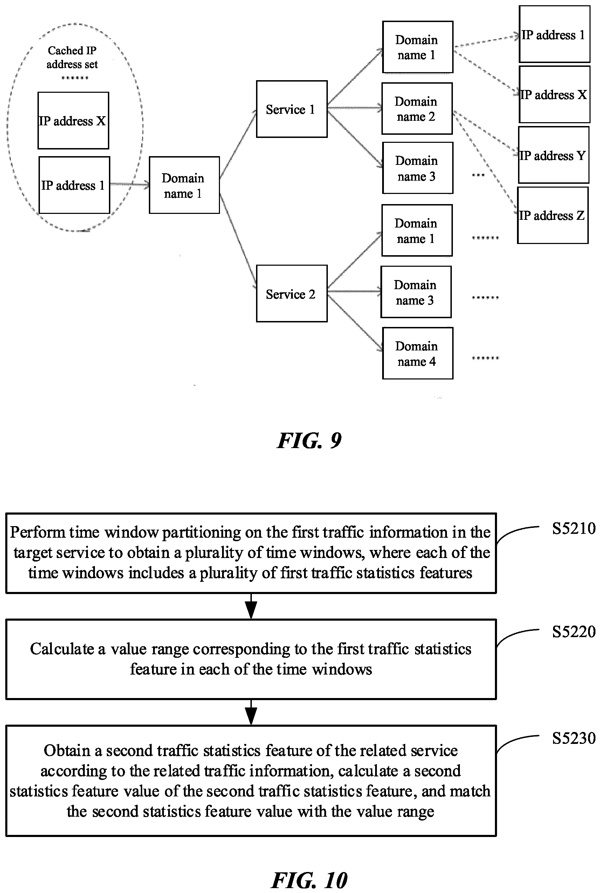

FIG. 9 is a schematic diagram of a fifth mapping relationship between related IP addresses. It should be noted that in a network traffic processing stage, a mapping relationship from IP addresses to domain names, i.e., a second mapping relationship between IP addresses and domain names, may be acquired through active DNS collection, to establish the second mapping relationship between relevant IP address and the domain name information. Because the first mapping relationship includes the second-level mapping relationship from the domain name information to the service information, a third mapping relationship between the related IP address and the service information may be established according to the second-level mapping relationship. The third mapping relationship may be a mapping relationship from the related IP address to domain name information and then from domain name information to service information, e.g., IP address 1 - domain name 1 - service 1, or IP address 1 - domain name x - service x.

At operation S5112, a fourth mapping relationship between the related IP address and the domain name information is established according to the first mapping relationship and the third mapping relationship.

It should be noted that because the first mapping relationship includes association information between the service information and the domain name information, e.g., from the domain name 1 to the service 1 and then from the service 1 to both the domain name 1 and the domain name 2, all domain name information corresponding to the service information can be found. Then, a fourth mapping relationship between the related IP address and the domain name information may be established according to the first mapping relationship and the third mapping relationship. The fourth mapping relationship includes a mapping relationship from the IP address to domain name information, then from the domain name information to service information, and then from the service information to the domain name information, e.g., IP address 1 - domain name 1 - service 1 - domain name 1 (domain name 2, domain name 3), or IP address 1 - domain name 1 - service 2 - domain name 1 (domain name 3, domain name 4).

At operation S5113, a fifth mapping relationship between the related IP addresses is established according to the second mapping relationship and the fourth mapping relationship.

It should be noted that because the second mapping relationship includes an association relationship between the related IP addresses and the domain name information, all domain name information corresponding to the related IP addresses can be found according to the second mapping relationship. Then, a fifth mapping relationship between the related IP addresses can be established according to the second mapping relationship. The fifth mapping relationship includes a mapping relationship from the related IP address to the domain name information, then from the domain name information to the service information, then from the service information to the domain name information, and then from the domain name information to the related IP address, e.g., IP address 1 - domain name 1 - service 1 - domain name 2 - IP address x.

At operation S5114, the cached IP address set corresponding to each of the domain name information is established according to the fifth mapping relationship.

It should be noted that according to the fifth mapping relationship, corresponding domain name information may be found according to a related IP address of a target service, then all related IP addresses corresponding to the domain name information may be found, and a cached IP address set is established using all the related IP addresses.

In an embodiment, the system for service identification obtains TTL information corresponding to the domain name information according to the response message returned by the DNS server, determines whether there is an expired IP address in the cached IP address set according to the TTL information, and if yes, deletes the expired IP address and deletes an association relationship between the expired IP address and the domain name.

At operation S5120, a current IP address of the current service is acquired, and the current IP address is matched against the cached IP address set.

In an embodiment, in the process of identifying the current service, the current IP address of the current service is acquired, and the current IP address is matched against all the related IP addresses in the cached IP address set.

In an embodiment, in the process of identifying the current service, the current IP address of the current service is acquired, and the current IP address is matched against some related IP addresses in the cached IP address set. For example, the current IP address is first matched against 50% of the related IP addresses in the cached IP address set, and then according to a result of the matching, it is determined whether to match the current IP address against the other 50% of the related IP addresses. The number/percentage of related IP addresses in the cached IP address set that are matched first may be determined according to an actual situation, which is not limited in this embodiment.

In an embodiment, the system may acquire a 4-tuple of a TCP packet (i.e., source IP address, destination IP address, TCP source port, TCP destination port), establish a TCP flow context, acquire a first IP packet of the TCP flow context, and compare the first IP packet with each related IP address in the cached IP address set.

In an embodiment, the system establishes a UDP flow context according to a 4-tuple of a UDP packet (i.e., source IP address, destination IP address, UDP source port, UDP destination port), establishes a UDP flow context, acquires a first IP packet of the UDP flow context, and compares the first IP packet with each related IP address in the cached IP address set.

At operation S5130, related traffic information of the related service corresponding to the current IP address is acquired if a match for the current IP address is found in the cached IP address set.

In an embodiment, if a match for the current IP address is found in the cached IP address set, it is indicated that one or more related services corresponding to the current IP address are found, related traffic information of the one or more related services is acquired. Because the fifth mapping relationship includes an association relationship of related IP address - domain name information - service information - domain name information - related IP address, service names of all corresponding related services can be found according to the current IP address, and related traffic information of each related service can be found.

FIG. 10 is a flowchart of an implementation of S5200 in FIG. 10, including the following operations S5210, S5220, and S5230.

At operation S5210, time window partitioning is performed on the first traffic information in the target service to obtain a plurality of time windows, where each of the time windows includes a plurality of first traffic statistics features.

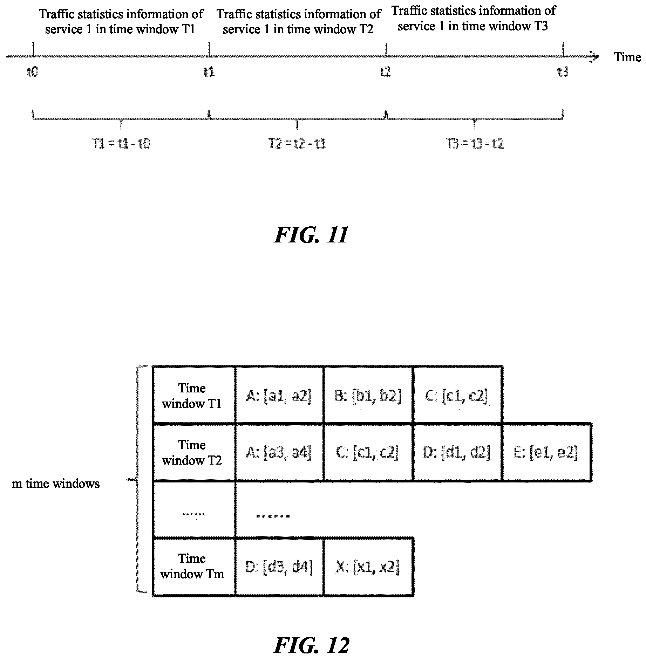

In some embodiments, in a sample information acquisition stage, information acquisition for a target service is performed for multiple times to obtain first traffic information corresponding to the multiple times of information acquisition , the first traffic information of the target service with a longest service time among the multiple information acquisition processes may be obtained, time window partitioning is performed on the first traffic information to obtain a plurality of time windows, and traffic statistical information of the first traffic information in each time window is acquired. The traffic statistical information includes the first traffic statistics feature. Each time window includes a plurality of first traffic statistics features. For example, referring to FIG. 11 and FIG. 12, a service 1 is partitioned into *m* number of time windows including T1, T2, T3, and Tm, where the time window T1 = (t1-t0), the time window T2 = (t2-t1), and the time window T3 = (t3-t2). Traffic statistical information of the service 1 in T1, T2, and T3 is respectively acquired. A first traffic statistics feature *A*, a first traffic statistics feature *B*, and a first traffic statistics feature C are included in the time window T1. A first traffic statistics feature *A,* a first traffic statistics feature *C*, a first traffic statistics feature *D,* and a first traffic statistics feature *E* are included in the time window T2, and a first traffic statistics feature *D*, and a first traffic statistics feature *X* are included in the time window Tm.

At operation S5220, a value range corresponding to the first traffic statistics feature is calculated in each of the time windows.

In some embodiments, each first traffic statistics feature has a corresponding first statistics feature value, and because the same time window includes a plurality of the same first traffic statistics features, the same first traffic statistics feature has a plurality of first statistics feature values in the same time window, so a value range corresponding to the same first traffic statistics feature may be obtained. As such, the value ranges of different first traffic statistics features in different time windows may be obtained. For example, referring to FIG. 11 and FIG. 12, there are *m* number of time windows. In the time window T1, a value range of the first traffic statistics feature *A* is [*a1, a2*]*,* a value range of the first traffic statistics feature *B* is [*b1, b2],* and a value range of the first traffic statistics feature *C* is [*c1, c2*]*.* In the time window T2, a value range of the first traffic statistics feature *A* is [*a3, a4*]*,* a value range of the first traffic statistics feature *C* is [*c1, c2*]*,* a value range of the first traffic statistics feature *D* is [*d1, d2*]*,* and a value range of the first traffic statistics feature E is [e1, e2]. In the time window Tm, a value range of the first traffic statistics feature *D* is [*d3, d4*]*,* and a valid value range of the first traffic statistics feature *X* is [*x1, x2*]*.*

At operation S5230, a second traffic statistics feature of the related service is obtained according to the related traffic information, a second statistics feature value of the second traffic statistics feature is calculated, and the second statistics feature value is matched with the value range.

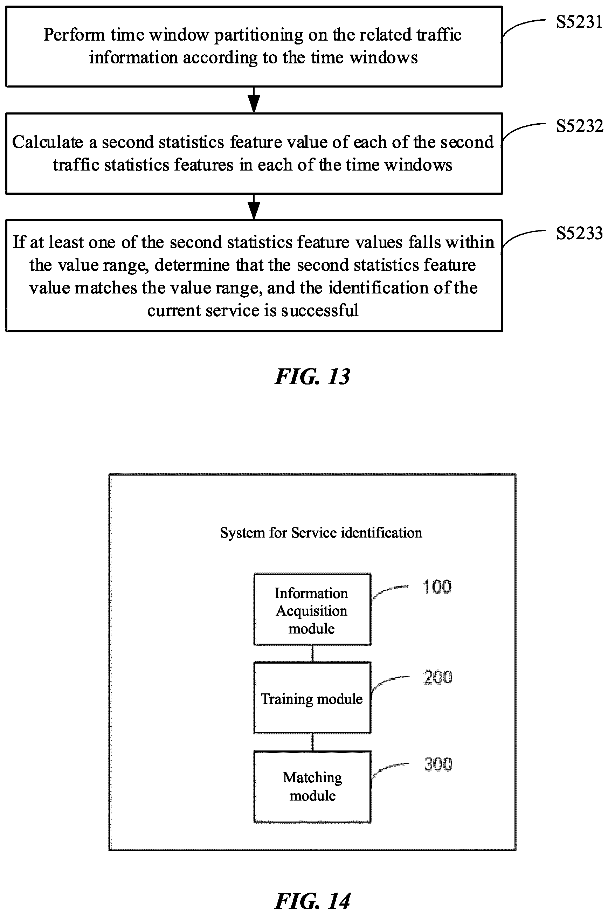

FIG. 13 is a flowchart of S5230 in FIG. 13, including the following operations S5231, S5232, and S5233.

At operation S5231, time window partitioning is performed on the related traffic information according to the time windows.

It should be noted that referring to FIG. 12, in a dashed box in FIG. 12, related IP addresses in a cached IP address set corresponding to a service 1 include an IP address 1, an IP address *X*, and an IP address *Y*. Related traffic information of related services corresponding to the related IP addresses is acquired, and time window partitioning is performed on the related traffic information to obtain a plurality of time windows. Different time windows include a plurality of different second traffic statistics features, and the same time window includes different second traffic statistics features. The time window partitioning on the related traffic information is similar to the time window partitioning on the first traffic information, so the details will not be described in this embodiment.

At operation S5232, a second statistics feature value of each of the second traffic statistics features in each of the time windows is calculated.

At operation S5233, if at least one of the second statistics feature values falls within the value range, it is determined that the second statistics feature value matches the value range, and the identification of the current service is successful.

It should be noted that a second statistics feature value of each of the second traffic statistics features in each of the time windows is calculated, the second statistics feature value is matched against a value range of the corresponding time window, and if the second traffic statistics feature value falls within the value range of the corresponding time window, it is determined that the second statistics feature value matches the time window.

In some embodiments, if the second statistics feature values of all the second traffic statistics features fall within the value range corresponding to each time window, it means that the second statistics feature values exactly match each time window of a specific service, and the current service is identified as the specific service, i.e., the identification of the current service is successful. For example, referring to FIG. 11 and FIG. 12, the second traffic statistics feature A represents the number of concurrent TCP connections in the time window, *a1* is 44, *a2* is 66, and the value range of the second traffic statistics feature A in the time window T1 is [44, 66]. In the process of identifying the current service, if the second traffic statistics feature *A*, i.e., the number of concurrent TCP connections of an IP address in the time window T1, falls within this range, for example, if the number of concurrent TCP connections is 55, it indicates that the second traffic statistics feature *A* of the service 1 matches in the time window T1.

In some embodiments, if the second statistics feature values of at least one second traffic statistics feature fall within the value range corresponding to each time window, it means that the second statistics feature values exactly match each time window of a specific service, and the current service is identified as the specific service, i.e., the identification of the current service is successful.

In some embodiments, if the second statistics feature values of at least one second traffic statistics feature fall within the value range corresponding to at least one time window, it means that the second statistics feature values match the time window of a specific service, and the current service is identified as the specific service, i.e., the identification of the current service is successful.

In some embodiments, if none of the related services matches the value range, it means that there is no identifiable service in the related services, i.e., the identification of the current service fails.

In some embodiments, if the identification of the current service is successful, a service which has not been identified among the related services is not considered.

In some embodiments, if the identification of the current service is successful, an associated IP address corresponding to the current service is obtained according to the fifth mapping relationship, and all traffic information corresponding to the associated IP address within a preset time period is identified as being associated with the current service. For example, referring to FIG. 11 and FIG. 12, when the current service is identified as the service 1, traffic information of IP addresses such as the IP address 1, the IP address *X,* and the IP address *Y* associated with the service 1 in a subsequent period of time is identified as being associated with the service 1, indicating that the user is executing the service 1.

An embodiment of the present disclosure provides a system for service identification. Referring to FIG. 14, the system includes:
an information acquisition module 100, configured for acquiring a first DNS message, and obtaining first traffic information of a target service according to the first DNS message, where the first traffic information includes domain name information;
a training module 200, configured for obtaining a first mapping relationship between the target service and the domain name information and a first traffic statistics feature of the target service according to the first traffic information; and
a matching module 300, configured for acquiring a second DNS message according to the domain name information, obtaining second traffic information according to the second DNS message, obtaining a related IP address corresponding to the domain name information according to the second traffic information, and performing service identification on a current service according to the first mapping relationship, the related IP address, and the first traffic statistics feature.

An embodiment of the present disclosure provides a service identification apparatus, including a memory and a processor. The memory is configured for storing a program which, when read and executed by the processor, causes the processor to implement the method according to the above embodiments.

An embodiment of the present disclosure provides a computer-readable storage medium, storing one or more programs which, when executed by one or more processors, cause the one or more processors to implement the method according to the above embodiments.

An embodiment of the present disclosure provides a computer program product, including a computer program or a computer instruction stored in a computer-readable storage medium, where the computer program or the computer instruction, when read from the computer-readable storage medium and executed by a processor of a computer device, cause the computer device to implement the method according to the above embodiments.

The memory, as a non-transitory computer-readable storage medium, may be configured for storing a non-transitory software program and a non-transitory computer-executable program. In addition, the memory may include a high-speed random access memory, and may also include a non-transitory memory, e.g., at least one magnetic disk storage device, flash memory device, or other non-transitory solid-state storage device. In some implementations, the memory may include memories located remotely from the processor, and the remote memories may be connected to the processor via a network. Examples of the network include, but not limited to, the Internet, an intranet, a local area network, a mobile communication network, and combinations thereof.

The non-transitory software program and instruction required to implement the method of the foregoing embodiments are stored in the memory which, when executed by the processor, cause the processor to implement the service identification method of the foregoing embodiments,
Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

In addition, an embodiment of the present disclosure further provides a computer program product, including a computer program or computer instructions stored in a computer-readable storage medium. A processor of a computer device reads the computer program or the computer instructions from the computer-readable storage medium. The processor executes the computer program or the computer instructions to cause the computer device to implement the method described above.

Although some embodiments of the present disclosure have been described above, the present disclosure is not limited to the implementations described above. Those having ordinary skills in the art can make various equivalent modifications or replacements without departing from the protection scope of the present disclosure. Such equivalent modifications or replacements fall within the scope defined by the claims of the present disclosure.

## Claims

1. A method for service identification, comprising:
acquiring a first Domain Name System (DNS) message;
obtaining first traffic information of a target service according to the first DNS message, wherein the first traffic information comprises domain name information;
obtaining a first mapping relationship between the target service and the domain name information, and a first traffic statistics feature of the target service according to the first traffic information;
acquiring a second DNS message according to the domain name information, obtaining second traffic information according to the second DNS message, and obtaining a related Internet Protocol (IP) address corresponding to the domain name information according to the second traffic information; and
performing service identification on a current service according to the first mapping relationship, the related IP address, and the first traffic statistics feature.

2. The method of claim 1, wherein the first traffic information comprises service information, and obtaining the first mapping relationship between the target service and the domain name information according to the first traffic information comprises:
acquiring the domain name information corresponding to the service information, and establishing a first-level mapping relationship from the service information to the domain name information;
acquiring the service information corresponding to the domain name information, and establishing a second-level mapping relationship from the domain name information to the service information; and
generating, according to the second-level mapping relationship and the first-level mapping relationship, the first mapping relationship in which the service information is associated with the domain name information.

3. The method of claim 2, wherein performing service identification on the current service according to the first mapping relationship, the related IP address, and the first traffic statistics feature comprises:
determining a related service of the current service according to the first mapping relationship and the related IP address; and
performing time series statistics feature matching on the related service according to the first traffic statistics feature to perform the service identification on the current service.

4. The method of claim 3, wherein a plurality pieces of domain name information are provided, and the domain name information is one of the plurality pieces of domain name information, and determining the related service of the current service according to the first mapping relationship and the related IP address comprises:
establishing a cached IP address set corresponding to all of the plurality pieces of domain name information according to the related IP address and the first mapping relationship;
acquiring a current IP address of the current service and perform a matching of the current IP address against the cached IP address set; and
acquiring related traffic information of the related service corresponding to the current IP address in response to a success of the matching of the current IP address within the cached IP address set.

5. The method of claim 4, wherein acquiring the second DNS message according to the domain name information, obtaining the second traffic information according to the second DNS message, and obtaining the related IP address corresponding to the domain name information according to the second traffic information comprises:
initiating a DNS query request to a DNS server according to the domain name information;
receiving a response message returned by the DNS server, wherein the response message comprises the second DNS message; and
obtaining the second traffic information according to the second DNS message, and obtaining the related IP address corresponding to the domain name information according to the second traffic information.

6. The method of claim 5, further comprising:
obtaining Time To Live (TTL) information corresponding to the domain name information according to the response message; and
removing an expired IP address from the cached IP address set according to the TTL information.

7. The method of claim 4, wherein a plurality of related IP addresses are provided, and the related IP address is one of the plurality of related IP addresses, and establishing the cached IP address set according to the related IP address and the first mapping relationship comprises:
for each of the plurality of related IP addresses, establishing a second mapping relationship between the respective related IP address and the domain name information, and establishing a third mapping relationship between the respective related IP address and the service information according to the first mapping relationship and the second mapping relationship;
for each of the plurality of related IP addresses, establishing a fourth mapping relationship between the respective related IP address and the domain name information according to the first mapping relationship and the third mapping relationship;
establishing a fifth mapping relationship between the plurality of related IP addresses according to the second mapping relationship and the fourth mapping relationship; and
establishing the cached IP address set corresponding to all of the plurality piece of domain name information according to the fifth mapping relationship.

8. The method of claim 4, wherein performing the time series statistics feature matching on the related service according to the first traffic statistics feature comprises:
performing time window partitioning on the first traffic information in the target service to obtain a plurality of time windows, wherein each of the time windows comprises a plurality of first traffic statistics features;
calculating a value range corresponding to the first traffic statistics features in each of the time windows; and
obtaining a second traffic statistics feature of the related service according to the related traffic information, calculating a second statistics feature value of the second traffic statistics feature, and matching the second statistics feature value with the value range.

9. The method of claim 8, wherein the related service has a plurality of a second traffic statistics features, and the second traffic statistics feature is one of the plurality of second traffic statistics features, each of the plurality of second traffic statistics features corresponds to a respective value range and
obtaining the second traffic statistics feature of the related service according to the related traffic information, calculating the second statistics feature value of the second traffic statistics feature, and matching the second statistics feature value with the value range comprises:
performing time window partitioning on the related traffic information according to the time windows;
calculating a plurality of second statistics feature values each for a respective one of the plurality of second traffic statistics features in each of the time windows; and
in response to at least one of the plurality of second statistics feature values falling within the respective value range, determining that the second statistics feature value matches the respective value range, and the identification of the current service is successful.

10. The method of claim 7, further comprising:
in response to a success in the identification of the current, obtaining an associated IP address corresponding to the current service according to the fifth mapping relationship; and
identifying all traffic information corresponding to the associated IP address within a preset time period as being associated with the current service.

11. The method of any one of claims 3 to 10, wherein, the current service is associated with a plurality of related services, and the related service is one of the plurality of related services, and the method further comprises:
in response to a success in the identification of the current service, cancelling the identification process of each unidentified service among the related services.

12. The method of any one of claims 1 to 10, wherein
the first traffic statistics feature comprises at least one of:
a range of a number of concurrent TCP connections,
a range of a number of concurrent User Datagram Protocol (UDP) connections,
a range of a ratio of an average uplink rate to an average downlink rate,
a range of a ratio of uplink traffic to downlink traffic,
a range of a number of distinct network-side ports, or
a range of a number of distinct domain names.

13. A system for service identification, comprising:
an information acquisition module, configured for acquiring a first Domain Name System (DNS) message, and obtaining first traffic information of a target service according to the first DNS message, wherein the first traffic information comprises domain name information;
a training module, configured for obtaining a first mapping relationship between the target service and the domain name information, and a first traffic statistics feature of the target service according to the first traffic information; and
a matching module, configured for acquiring a second DNS message according to the domain name information, obtaining second traffic information according to the second DNS message, obtaining a related Internet Protocol (IP) address corresponding to the domain name information according to the second traffic information, and performing service identification on a current service according to the first mapping relationship, the related IP address, and the first traffic statistics feature.

14. An apparatus for service identification, comprising a processor and a memory storing a program which, when executed by the processor, causes the processor to perform the method of any one of claims 1 to 12.

15. A computer-readable storage medium, storing at least one program which, when executed by at least one processor, cause the processor to perform the method of any one of claims 1 to 12.

16. A computer program product, comprising a computer program or a computer instruction stored in a computer-readable storage medium, wherein the computer program or the computer instruction, when read from the computer-readable storage medium and executed by a processor of a computer device, causes the computer device to perform the method of any one of claims 1 to 12.
